# EUROPEAN PATENT APPLICATION

(11) **EP 4 768 250 A1**
(43) Date of publication of application: **01.07.2026**
(21) Application number: 24872622.6
(22) Date of filing: 12.03.2024
(51) Int. Cl.: B41F 15/36, B41F 15/44, B41F 15/26, B41F 15/20, B41F 15/12, B41N 1/24, B41N 1/04, B41F 21/06, A23P 10/10

(54) **MASK-PRINTING APPARATUS FOR MANUFACTURING FILM-TYPE EDIBLE PRODUCTS**

(30) Priority: 27.09.2023 KR 20230130805
(71) Applicant: People & Technology Inc., Gumi-si, Gyeongsangbuk-do 39422 (KR)
(72) Inventor: KIM, Joonsup, Gumi-si, Gyeongsangbuk-do 39422 (KR); SHIN, Soonwoo, Gumi-si, Gyeongsangbuk-do 39212 (KR); LEE, Byeong Geun, Chilgok-gun, Gyeongsangbuk-do 39823 (KR)
(74) Representative: BCKIP Part mbB
(86) International application number: PCT/KR2024/003180
(87) International publication number: WO 2025/070907

(57) **Abstract**

The present invention relates to a mask-printing apparatus for manufacturing film-type edible products. The mask-printing apparatus comprises: a support structure through which an externally supplied printable substrate passes; a substrate guide means which is mounted to the support structure and guides the conveyance of the substrate; a substrate support unit which is installed below a conveyance path of the substrate and supports the substrate when printing edible raw materials on the upper surface of the substrate; a metal mask which is mounted above the substrate support unit so as to be capable of moving up and down, and which is in close contact with the upper surface of the substrate during printing and has a plurality of printing holes through which the edible raw materials pass; and a printing unit which spreads the edible raw materials on the upper surface of the metal mask so that the edible raw materials are printed on the substrate via the printing holes. The mask-printing apparatus for manufacturing film-type edible products according to the present invention as described above can produce edible products of various shapes via a printing method using metal masks, and only ejects edible raw materials in a paste state just before printing, and thus viscosity changes in the raw materials can be minimized since the time of contact between the raw materials and air is short.

## Description

### [Technical Field]

The present invention relates to an apparatus for manufacturing a film-type edible product, and more particularly, to a mask-printing-type apparatus for manufacturing film-type edible products capable of continuously producing film-type edible products having various shapes.

### [Background Art]

A film-type edible product is a product formed into a thin film shape after mixing various food ingredients, and has a size that can be placed in the mouth. When the film-type edible product is, for example, placed on the tongue, it gradually dissolves and the substance contained in the product is absorbed into the body.

There are various types of film-type edible products depending on their intended purposes. For example, products for removing bad breath or for dental hygiene, and products for freshening the mouth after meals are known. Since the film-type edible product takes the form of a thin film, it has a disadvantage of being vulnerable to moisture, and therefore it is generally sealed and packaged individually.

As an apparatus for manufacturing such film-type edible products, Korean Registered Patent Publication No. 10-1214140 (Method for Manufacturing Edible Film Product and Manufacturing Apparatus Thereof) has been disclosed.

However, the disclosed manufacturing method has disadvantages in that the production speed is slow and an edible film is first produced in the form of a base sheet and then cut and produced using a pick-and-place method, thereby making it impossible to implement various shapes. That is, only a simple rectangular shape can be produced. In addition, since coating of the raw materials is performed at once, when a small amount of raw material is loaded, the loss of usable raw material relative to the input amount becomes large.

Manufacturing apparatuses employing a metal mask printing method have also been used. However, in conventional metal mask type manufacturing apparatuses, it is difficult to print products having printing patterns with large openings. In addition, since the raw material is poured onto the metal mask at once and then printed, the exposure time of the paste-type material on the metal mask becomes long, making it vulnerable to contamination. Furthermore, due to changes in the viscosity of the raw materials, it is difficult to produce products having uniform quality, and there is also a problem of large loss of raw materials.

In addition, although a roll-to-roll type manufacturing apparatus is advantageous for mass production, continuous coating while maintaining a constant pattern pitch is limited due to the rectangular frame size of the metal mask, and there is also a disadvantage in that the printed patterns may come into contact with a roll or other mechanical structures.

### [Detailed description of the invention]

### [Technical Problem]

An object of the present invention is to provide a mask printing-type apparatus for manufacturing film-type edible products capable of producing edible products having various shapes.

Another object of the present invention is to provide a mask printing-type apparatus for manufacturing film-type edible products in which a paste-type raw material is discharged only immediately before printing, thereby shortening the contact time of the raw material with air and minimizing changes in the viscosity of the raw material.

### [Technical Solution]

As a technical solution for achieving the above object, a mask printing-type apparatus for manufacturing film-type edible products according to the present invention comprises: a support structure through which a printing base material supplied from the outside passes; a base material guide means mounted on the support structure for guiding the transfer of the base material; a base material support part installed below a transfer path of the base material and supporting the base material when a edible raw material is printed on an upper surface of the base material; a metal mask installed above the base material support part so as to be movable up and down, the metal mask being brought into close contact with the upper surface of the base material during printing and having a plurality of printing holes through which the edible raw material passes; and a printing unit that spreads the edible raw material on an upper surface of the metal mask so that the edible raw material is printed on the base material through the printing holes.

The base material guide means comprises: a horizontal maintaining roll that maintains the base material horizontally between the base material support part and the metal mask; and a suction roll installed at a lower height than the horizontal maintaining roll and configured to transfer the base material after printing while adsorbing the base material.

The base material support part comprises: a support frame fixed to the support structure; a suction horizontal plate installed above the support frame so as to be movable up and down and configured to adsorb a lower surface of the base material in a raised state; and a suction plate cylinder configured to move the suction horizontal plate up and down.

The support structure further includes a mask position adjusting unit connected to the metal mask and configured to adjust a position of the metal mask.

The metal mask includes: a mask plate having a predetermined thickness in which the printing holes are formed; and side walls integrally formed on an upper surface of an outer portion of the mask plate to prevent the edible raw material from escaping.

The printing unit comprises: a raw material discharge unit that supplies the edible raw material onto the upper surface of the metal mask; a squeegee that spreads the supplied edible raw material on the mask plate; a printing head including a squeegee lifting means configured to move the squeegee up and down; and a head driving unit configured to reciprocate the printing head so that the squeegee spreads the edible raw material on the mask plate.

The head driving unit comprises: a cross rail extending in a direction perpendicular to a transfer direction of the base material; a slider slidably mounted on the cross rail; and a supporter fixed to the slider and supporting the printing head. The printing unit further includes: a lifting support plate supported by the supporter so as to be movable up and down; and a support plate lifting unit configured to adjust a height of the lifting support plate. The squeegees are disposed below the lifting support plate and are spaced apart from each other in parallel with a raw material discharge unit interposed therebetween. The squeegee lifting means comprises squeegee cylinders positioned above the lifting support plate and configured to independently move each of the squeegees up and down.

The raw material discharge unit comprises a slit die having: a bank, which is a space for temporarily receiving the edible raw material supplied from the outside; and one or more discharge slits configured to discharge the raw material in the bank downward toward the metal plate.

The apparatus further comprises a dryer configured to dry a printed product printed on the base material that has passed through the support structure.

### [Advantageous Effects]

In the mask printing-type apparatus for manufacturing film-type edible products according to the present invention configured as described above, edible products having various shapes can be produced through a printing method using a metal mask. Further, since the paste-type edible raw material is discharged only immediately before printing, the contact time of the raw material with air is shortened, thereby minimizing changes in the viscosity of the raw material.

### [Description of Drawings]

FIG. 1 is a view illustrating an edible product manufactured by a film-type edible product manufacturing apparatus according to an embodiment of the present invention.
FIG. 2 (a) to (f) are views illustrating various modified examples of the edible product of FIG. 1.
FIG. 3 is a perspective view of a mask printing-type apparatus for manufacturing film-type edible products according to an embodiment of the present invention.
FIG. 4 is a front view illustrating an internal structure of the manufacturing apparatus of FIG. 3.
FIG. 5 is a view illustrating a printing unit and a base material support part of the product printer of FIG. 3 separately.
FIGS. 6 and 7 are perspective views for explaining a position adjusting method of the metal mask shown in FIG. 5.
FIG. 8 is a view illustrating the metal mask and the printing head of FIG. 5 separately.
FIG. 9 is a side view of the printing head shown in FIG. 8.
FIG. 10 is an exploded perspective view of the slit die shown in FIG. 9.
FIGS. 11 (a) (b) are views for explaining an operation of the printing head shown in FIG. 9.
FIG. 12 is a partially cutaway exploded perspective view of the suction roll shown in FIG. 13.
FIG. 13 is a view illustrating a modified example of a metal mask applicable to the product printer of FIG. 3.

### [Best Mode]

Hereinafter, one embodiment according to the present invention will be described in more detail with reference to the accompanying drawings.

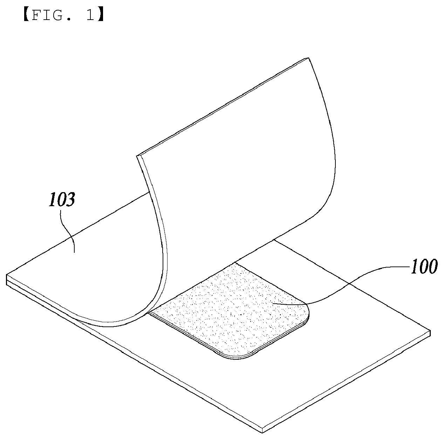

FIG. 1 is a view schematically illustrating an edible product (100) manufactured by a film-type edible product manufacturing apparatus (10) according to an embodiment of the present invention.

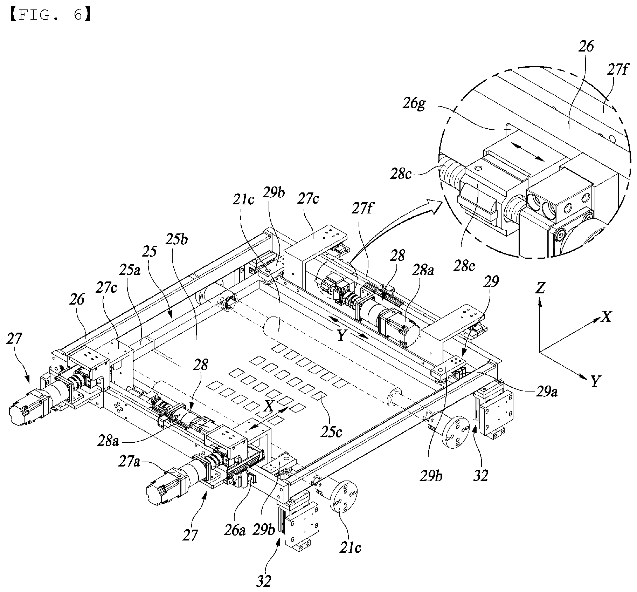

The illustrated edible product (100) is produced by printing an edible raw material, so to speak, using a screen printing method. That is, a paste-type edible raw material (hereinafter referred to as edible raw material (Z)) is supplied onto a metal mask (25) having a plurality of printing holes (25c in FIG. 6), and the edible product is produced by a screen printing process. Naturally, the shape of the edible product (100) reflects the shape of the printing holes (25c) of the metal mask. Since the edible raw material itself is of a general type, a detailed description thereof will be omitted.

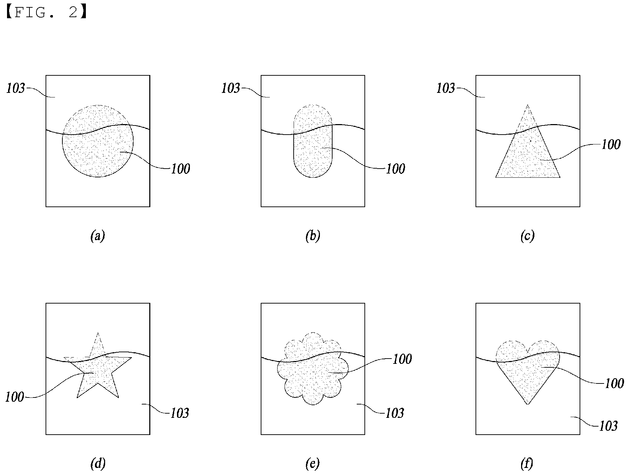

As the edible product (100) is manufactured by a printing method using the metal mask (25), the shape of the product body (100) can be very diverse, as shown in FIG. 2.

For reference, a conventional edible product manufacturing apparatus has a structure in which edible raw material is first spread in the form of a wide sheet, and then the spread sheet is cut along a plurality of straight lines intersecting each other. Accordingly, conventional edible products have a simple rectangular shape. For example, shapes such as circular, clover-shaped, triangular, or star-shaped cannot be produced. Although edible products having various shapes may be cut out using a Thomson blade, this causes a large amount of loss of the edible raw material, resulting in very low productivity and efficiency in industrial production.

Reference numeral 103 denotes a packaging material. The edible product (100) is sealed and contained in the packaging material (103). A user may tear the packaging material (103) and consume the product.

FIGS. 2A to 2F are views illustrating various modified examples of the edible product shown in FIG. 1.

As illustrated in FIGS. 2A to 2F, the edible product (100) may have various shapes. That is, the edible product may be produced in shapes such as circular, oval, triangular, star-shaped, cloud-shaped, or heart-shaped. The reason why such various shapes of the product (100) can be produced is that the product (100) is manufactured using a screen printing method with the metal mask (25). The metal mask (25) may have, for example, a structure as shown in FIG. 17.

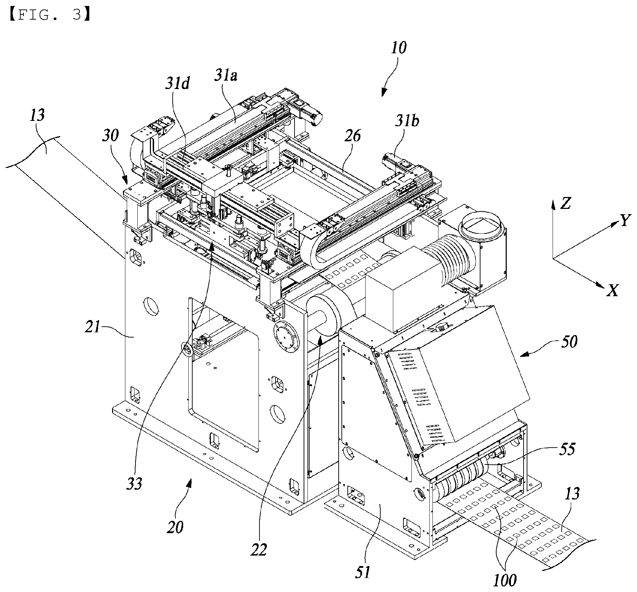

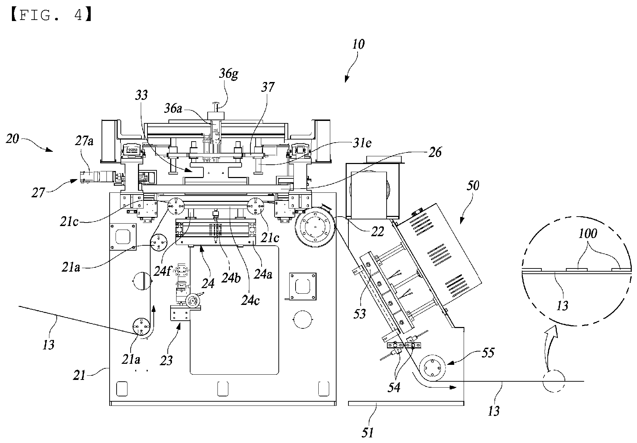

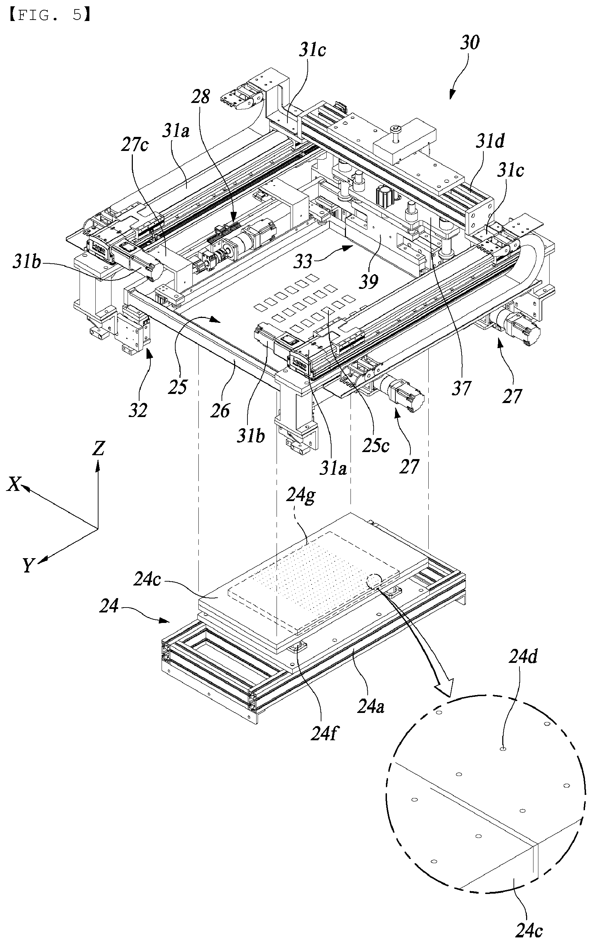

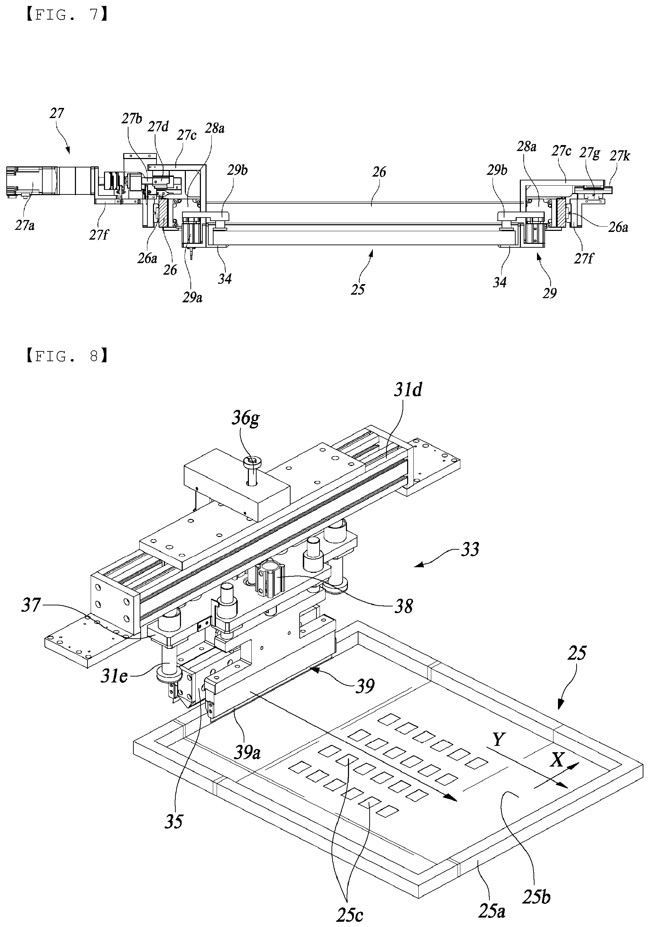

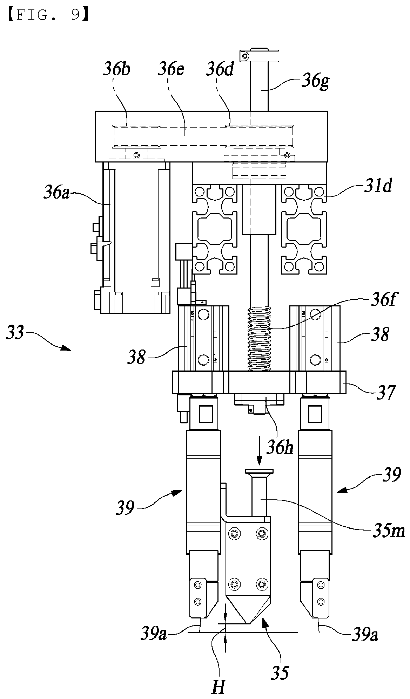

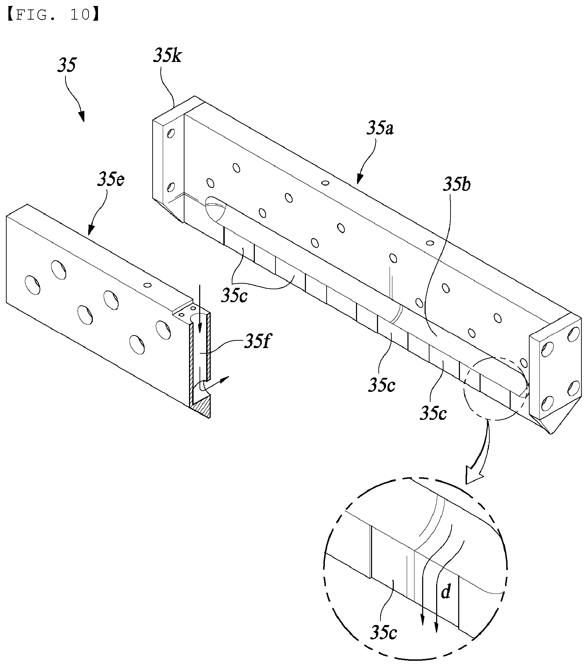

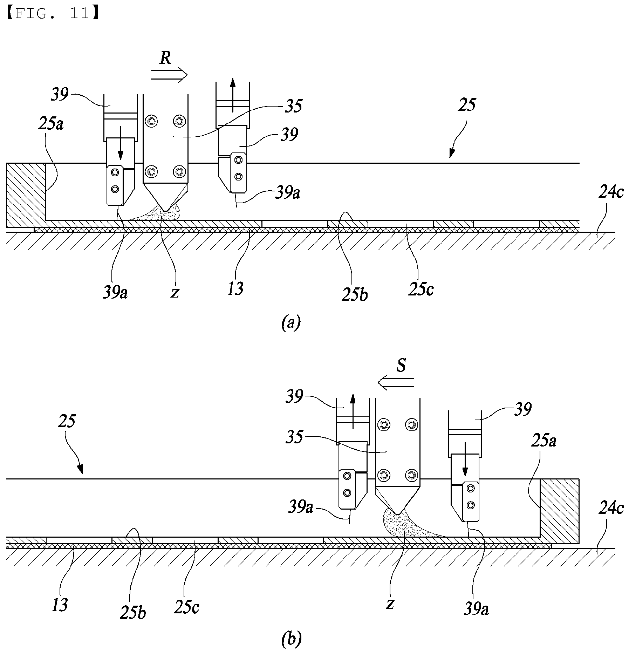

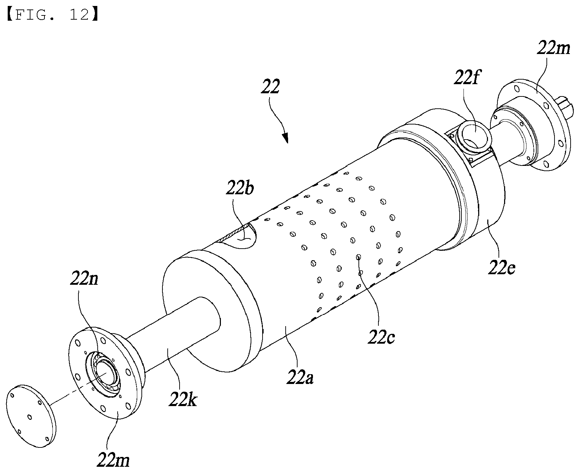

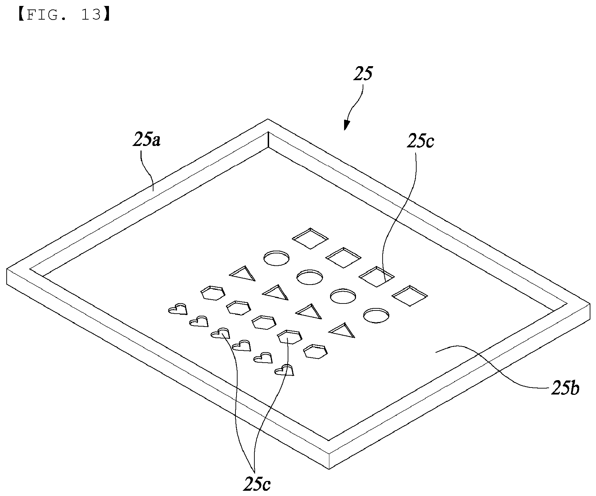

FIG. 3 is a perspective view of a mask printing-type apparatus for manufacturing film-type edible products according to an embodiment of the present invention, and FIG. 4 is a front view showing the internal structure of the manufacturing apparatus of FIG. 3. In addition, FIG. 5 is a view illustrating a printing unit and a base material support part of the product printer of FIG. 3 separately. FIGS. 6 and 7 are perspective views for explaining a method of adjusting the position of the metal mask shown in FIG. 5. FIG. 8 is a view separately illustrating the metal mask and the printing head of FIG. 5, and FIG. 9 is a side view of the printing head shown in FIG. 8. FIG. 10 is an exploded perspective view of the slit die shown in FIG. 9, and FIGS. 11A and 11B are views for explaining the operation of the printing head shown in FIG. 9. FIG. 12 is a partially cutaway exploded perspective view of the suction roll, and FIG. 13 is a view illustrating a modified example of the metal mask.

As illustrated, the mask printing-type apparatus for manufacturing film-type edible products (10) according to the present embodiment basically includes a product printer (20) and a heating dryer (50).

The product printer (20) prints the edible raw material on the upper surface of a base material (13) passing through the interior thereof, and the heating dryer (50) heats and dries the printed material, that is, the printed edible raw material. Since the edible raw material is in the form of a paste, it needs to be dried through the heating dryer (50).

The product printer (20) includes a support structure (21), a base material guide means, a base material support part (24), a metal mask (25), and a printing unit (30).

The support structure (21) is a fixed frame erected on the ground. A base material (13) continuously supplied from the outside passes through the interior of the support structure (21).

The base material guide means is an element mounted inside the support structure (21) for guiding the transfer of the base material (13) passing through the support structure (21). The base material guide means includes a guide roll (21a), a horizontal maintaining roll (21c), and a suction roll (22).

As shown in FIG. 4, the guide roll (21a) is a horizontal member arranged vertically, and guides the base material (13) entering the interior of the support structure (21) toward the horizontal maintaining roll (21c).

The horizontal maintaining roll (21c) serves to maintain the base material (13) horizontally between the base material support part (24) and the metal mask (25). Two horizontal maintaining rolls (21c) form one set and are installed on opposite sides with the suction horizontal plate (24c) of the base material support part (24) interposed therebetween, thereby forming a symmetrical arrangement. The base material (13) supported by the horizontal maintaining rolls (21c) maintains a horizontal state and is parallel to an upper surface of the suction horizontal plate (24c).

The suction roll (22) is installed at a lower height than the horizontal maintaining roll (21c) and transfers the base material (13), on which printing has been completed between the base material support part (24) and the metal mask (25), while adsorbing a lower surface of the base material (13). Being installed at a lower height than the horizontal maintaining roll (21c) means that, with respect to the ground level, the suction roll (22) is positioned at a lower location than the horizontal maintaining roll (21c). The suction roll (22) is separately illustrated in FIG. 12.

As illustrated, the suction roll (22) includes a suction drum (22a), a connection ring (22e), a roll shaft (22k), and a fixing disk (22m). The suction roll (22) is connected to an external vacuum pump (41). By the suction force of the vacuum pump, the base material (13) is adsorbed onto an outer circumferential surface of the suction roll (22).

The suction drum (22a) is a hollow cylindrical member having a predetermined diameter and an internal space (22b). A plurality of fine holes (22c) are formed in a circumferential portion of the suction drum (22a). The fine holes (22c) provide passages through which outside air is drawn into the suction drum (22a) when internal pressure of the space (22b) decreases.

The connection ring (22e) is a ring-shaped member fixed to one end of the suction drum (22a) and includes a suction hole (22f). The suction hole (22f) is an opening to which the vacuum pump is connected. When the vacuum pump operates, air inside the space (22b) is discharged to the outside through the suction hole (22f), thereby forming negative pressure in the space (22b).

As the suction drum (22a) maintains the negative pressure, the base material (13) contacting the outer circumferential surface of the suction drum (22a) adheres closely to the suction drum (22a) due to the negative pressure. When the suction roll (22) rotates in this state, the rotational force of the suction roll (22) is transmitted to the base material (13). Since the base material (13) is transferred in an adsorbed state, tension is stably maintained and slipping or wandering is prevented.

The roll shaft (22k) is a shaft having one end fixed to the suction drum (22a) and the connection ring (22e), respectively, and the other end supported by the support structure (21) through the fixing disk (22m) so as to be rotatable about an axis. A bearing (22n) is installed between each roll shaft (22k) and the fixing disk (22m). The roll shaft (22k) is rotatable while being supported by the bearing (22n).

Meanwhile, the base material support part (24) is installed below a transfer path of the base material (13) and supports the base material when edible raw material is printed on an upper surface of the base material (13), thereby preventing the base material (13) from sagging downward.

The base material support part (24) includes a support frame (24a), a suction horizontal plate (24c), a vertical rod (24f), and a suction plate cylinder (24b).

The support frame (24a) has a rectangular frame shape and is horizontally fixed inside the support structure (21). The support frame (24a) supports the vertical rod (24f) so as to move up and down. The vertical rod (24f) is a round bar supported by the support frame (24a) and extending vertically.

The suction horizontal plate (24c) is fixed to an upper end of the vertical rod (24f). The suction horizontal plate (24c) is a rectangular horizontal plate that can move up and down above the support frame (24a). As shown in FIG. 5, a negative-pressure space (24g) is formed inside the suction horizontal plate (24c). The negative-pressure space (24g) is connected to an external vacuum pump and is opened upward through a plurality of suction holes (24d).

When internal pressure of the negative-pressure space (24g) is lowered using the vacuum pump, air above the suction horizontal plate (24c) is drawn into the suction horizontal plate (24c). When the suction horizontal plate (24c) is raised and brought into close contact with the lower surface of the base material (13) and negative pressure is generated, the base material (13) is fixed to the upper surface of the suction horizontal plate (24c).

The suction plate cylinder (24b) is an element that moves the suction horizontal plate (24c) up and down. Through the suction plate cylinder (24b), the suction horizontal plate (24c) is raised or lowered within a predetermined stroke range.

The metal mask (25) is installed vertically above the base material support part (24), and during printing is brought into close contact with the upper surface of the base material. As shown in FIG. 6, the metal mask (25) includes a plurality of printing holes (25c) through which edible raw material passes. The metal mask (25) can be position-adjusted in X, Y, and Z directions above the transfer path of the base material (13). In this description, the X direction refers to a direction parallel to the transfer direction of the base material, the Y direction refers to a width direction of the base material, and the Z direction refers to a vertical direction.

The metal mask (25) includes a mask plate (25b) having a predetermined thickness and a side wall (25a). The mask plate (25b) is horizontal and can be brought into close contact with the upper surface of the base material (13). The thickness of the mask plate (25b) may vary. As the thickness of the mask plate (25b) increases, the thickness of the edible product (100) correspondingly increases. A plurality of printing holes (25c) are formed in a central portion of the mask plate (25b). The printing holes (25c) are arranged at predetermined intervals in the X and Y directions.

The side wall (25a) is a rectangular frame integrally formed along a perimeter of the upper surface of the mask plate (25b), and prevents the edible raw material (Z in FIG. 11) supplied onto the upper surface of the mask plate (25b) from flowing out of the mask plate (25b).

FIG. 13 is a perspective view illustrating a modified example of the metal mask (25).

As shown in FIG. 13, the printing holes (25c) may have various shapes. In FIG. 13, the printing holes (25c) have shapes such as a heart, hexagon, triangle, circle, and square. By applying various shapes of the printing holes (25c), various shapes of edible products (100) can be produced beyond a simple rectangular edible product.

The metal mask (25) can be position-adjusted in the X, Y, and Z directions of FIG. 6 through a mask position adjusting unit. That is, three-dimensional movement in forward, backward, left, right, upward, and downward directions is possible.

The reason the metal mask (25) is configured to be position-adjustable in the X direction is to compensate for possible errors in the transfer distance in a longitudinal direction (transfer direction) of the base material (13). The base material (13) is stepwise transferred by a predetermined pitch distance, and when an error occurs in the pitch distance due to slipping or other causes, the error can be compensated. For example, if the input pitch distance is 50 cm but the actual transferred length of the base material is 49 cm, the mask position adjusting unit moves the metal mask (25) by 1 cm in a direction opposite to the transfer direction of the base material.

The reason the metal mask (25) is configured to be position-adjustable in the Y direction is to compensate for lateral deviation of the base material (13) in a width direction. For example, if the base material is offset by about 5 mm toward the left in the width direction, the mask position adjusting unit moves the metal mask (25) by 5 mm in the direction of the offset.

In addition, the metal mask (25) is designed to move up and down in the Z direction in order to print the edible raw material (Z). The mask position adjusting unit lowers the metal mask (25) so that a lower surface of the metal mask (25) closely contacts the upper surface of the base material (13), and printing is performed by supplying the edible raw material (Z). After printing is completed, the metal mask (25) is raised again so that the base material (13) can be transferred.

The mask position adjusting unit includes a mask receiving frame (26), a rod bracket (34), an X driving unit (27), a Y driving unit (28), and a Z driving unit (29).

The mask receiving frame (26) is a rectangular frame surrounding the metal mask (25) and includes frame cylinders (32) provided at lower portions of four corners thereof. The frame cylinders (32) adjust a vertical position of the mask receiving frame (26) while being fixed to the support structure (21).

In addition, Y rails (26a in FIG. 7) are horizontally mounted on outer surfaces of both ends of the mask receiving frame (26) in the X direction. The Y rails (26a) guide movement of a sliding connector (27f) in the Y direction.

The rod bracket (34) is a rod-shaped member having a widthwise central portion bent at a right angle, and horizontally supports the metal mask (25) while being positioned on opposite sides with the metal mask (25) interposed therebetween. Each rod bracket (34) is fixed to an end portion of a connection bracket (27c). Since the connection bracket (27c) is indirectly fixed to the mask receiving frame (26), the rod bracket (34) also remains fixed inside the mask receiving frame (26) .

The X driving unit (27) performs a function of adjusting the position of the metal mask (25) in the X direction. The X driving unit (27) includes an X motor (27a), a lead screw (27b), a sliding connector (27f), a connection bracket (27c), and a nut block (27d).

The X motor (27a) is supported by the sliding connector (27f) and outputs rotational force while maintaining a horizontal orientation. That is, the lead screw (27b) is rotated clockwise or counterclockwise about its axis. The sliding connector (27f) is supported by the Y rail (26a) and can be position-adjusted in the Y direction.

The nut block (27d) is a component engaged with the lead screw (27b) and is fixed to the connection bracket (27c). The connection bracket (27c) is an L-shaped bent member, one end of which is fixed to the rod bracket (34). Accordingly, the metal mask (25) moves in the X direction by operation of the X motor (27a).

The sliding connector (27f) located on the right side in FIG. 7 is also supported by the Y rail (26a) and includes a second Y rail (27g) and an X rail (27k) at an upper portion thereof. The second Y rail (27g) is parallel to the Y rail (26a) and supports the X rail (27k) so as to be position-adjustable in the Y direction. The X rail (27k) supports an end portion of the connection bracket (27c).

Accordingly, the X driving unit (27), while itself being supported by the mask receiving frame (26) so as to be position-adjustable in the Y direction, moves the metal mask (25) in the X direction by means of the X motor (27a).

The Y driving unit (28) functions to move the metal mask (25) in the Y direction. The Y driving unit (28) includes a Y motor (28a), a lead screw (28c), and a nut block (28e).

The Y motor (28a) is fixed inside the mask receiving frame (26) and rotates the lead screw (28c) about its axis in both directions. The nut block (28e) is engaged with the lead screw (28c). The nut block (28e) is a member coupled to the lead screw (28c) and is connected to the sliding connector (27f) through a side passage (26g). The side passage (26g) is an opening through which the nut block (28e) passes.

When the Y motor (28a) operates, the nut block (28e) moves in the Y direction within the side passage (26g). At this time, the sliding connector (27f) connected to the nut block (28e) also moves together therewith.

The Z driving unit (29) includes Z cylinders (29a) fixed to both end portions of the rod brackets (34) on opposite sides.

The Z driving unit (29) further includes connection arms (29b). Each connection arm (29b) connects the Z cylinder (29a) and the metal mask (25). The connection arms (29b) move up and down by operation of the Z driving unit (29). Accordingly, the metal mask (25) performs an up-and-down movement by the Z driving unit (29). As described above, the metal mask (25) can move in forward, backward, left, right, upward, and downward directions by the X, Y, and Z driving units (27, 28, and 29).

Meanwhile, as shown in FIGS. 11A and 11B, the printing unit (30) supplies the edible raw material (Z) onto an upper portion of the metal mask (25) and spreads the supplied edible raw material on the metal mask (similar to a silk-screen printing method) so that the edible raw material fills the printing holes (25c). The edible raw material filled in the printing holes (25c) becomes the edible product (100) after drying and packaging.

The printing unit (30) includes a printing head (33) and a head driving unit.

The head driving unit reciprocates the printing head (33) in a direction indicated by arrow R or S in FIG. 11, thereby allowing the printing head (33) to print the edible product (100) on the base material (13).

The head driving unit includes a cross rail (31a), a slider (31c), and a supporter (31d).

The cross rail (31a) is a linear member extending in a direction perpendicular to the transfer direction of the base material (13). Two cross rails (31a) are arranged parallel to each other with the metal mask (25) interposed therebetween.

The slider (31c) is slidably mounted on each cross rail (31a) and supports both ends of the supporter (31d). A squeezing motor (31b) is installed on the slider (31c). The slider (31c) reciprocates by operation of the squeezing motor (31b). The supporter (31d) is a horizontal beam crossing above the metal mask (25), and supports the printing head (33) while both ends thereof are fixed to the sliders.

As shown in FIG. 9, the printing head (33) includes a lifting support plate (37), a support plate lifting unit, a raw material discharge unit, a pair of squeegees (39), and a squeegee lifting means.

The lifting support plate (37) is a horizontal flat plate installed below the supporter (31d) so as to be movable up and down. The vertical movement of the lifting support plate (37) is guided by vertical guide rods (31e) and is performed by the support plate lifting unit. Each vertical guide rod (31e) is a vertical round bar having an upper end fixed to the supporter (31d).

The support plate lifting unit serves to repeatedly move the lifting support plate (37) up and down and includes a servo motor (36a), a belt (36e), a vertical screw (36g), and a nut portion (36h).

The servo motor (36a) is a rotational force generating unit installed vertically on a side of the supporter (31d) and includes a driving pulley (36b) on a drive shaft. The vertical screw (36g) is a vertical rod installed on the supporter (31d) so as to be rotatable about its axis and includes a male screw portion (36f) at a lower portion thereof. A driven pulley (36d) is mounted on the vertical screw (36g), and the driven pulley (36d) is connected to the driving pulley (36b) through the belt (36e). When the servo motor (36a) operates, the vertical screw (36g) rotates about its axis.

The nut portion (36h) is fixed to a lower surface of the lifting support plate (37) and is screw-coupled with the male screw portion (36f). As the vertical screw (36g) rotates about its axis, the lifting support plate (37) moves up and down.

The squeegees (39) are arranged in parallel and spaced apart below the lifting support plate (37), and each has a squeegeeing blade (39a) at a lower end thereof. A squeegee lifting cylinder (38) is installed above each squeegee (39). The squeegee lifting cylinder (38) is fixed to the lifting support plate (37) and functions as a squeegee lifting means for moving the squeegee (39) up and down.

The squeegee lifting cylinders (38) on both sides alternately lower the squeegees. For example, when the left squeegee (39) in the drawing is lowered, the right squeegee (39) is raised, and when the right squeegee (39) is lowered, the left squeegee (39) is raised. When the squeegee (39) is lowered, the squeegeeing blade (39a) comes into line contact with the mask plate (25b), as shown in FIG. 11.

The raw material discharge unit is installed between the two squeegees (39) and discharges the paste-type edible raw material supplied from the outside onto the metal mask. In the present embodiment, the raw material discharge unit is a slit die (35). The slit die (35) is installed between the two squeegees (39) and is mounted on the left squeegee (39) in the drawing of FIG. 9.

A lower end of the slit die (35) is positioned higher than the lower end of the squeegeeing blade (39a) of the left squeegee (39) by a height H. Accordingly, the slit die (35) remains spaced from the mask plate (25b) while the squeegeeing blade (39a) is in contact with the mask plate (25b).

As described above, when one squeegee (39) is lowered, the opposite squeegee (39) is raised. Thus, when the right squeegee (39) in FIG. 9 is lowered, the slit die (35) rises higher than the height H. Since the slit die (35) always remains spaced from the mask plate (25b), the edible raw material (Z) can be smoothly discharged from the slit die (35).

The slit die (35) has the structure illustrated in FIG. 10.

As shown, the slit die (35) includes a first die half (35e), a second die half (35a), and a finishing plate (35k). The first die half (35e) and the second die half (35a) are tightly coupled to each other and allow the edible raw material to pass through the interior thereof.

The first die half (35e) includes an injection passage (35f). The injection passage (35f) guides the edible raw material (Z), supplied through a raw material supply tube (35m in FIG. 9), to a bank (35b).

The second die half (35a) includes the bank (35b) and a plurality of discharge slits (35c). The bank (35b) is a space in which the edible raw material supplied through the injection passage (35f) is temporarily collected. The discharge slits (35c) provide flow paths through which the edible raw material in the bank (35b) flows downward in the direction indicated by arrow d.

Intervals between the discharge slits (35c) correspond to intervals of the printing holes (25c) in the metal mask (25). The edible raw material discharged downward through the discharge slits (35c) is applied onto the mask plate (25b) in the form of a strip having a predetermined width. The finishing plate (35k) serves to fix the first and second die halves (35e, 35a). Depending on the embodiment, only one discharge slit may be used.

The squeegee lifting means is a squeegee cylinder (38) positioned above the lifting support plate (37) and configured to independently move each of the squeegees up and down. The squeegees (39) on both sides move up and down by the squeegee cylinders (38). The squeegee cylinders (38) alternately lower the squeegees. As described above, when one squeegee (39) is lowered, the opposite squeegee is raised.

FIG. 11A illustrates the printing head (33) moving in the direction of arrow R.

Referring to FIG. 11A, the edible raw material (Z) is discharged from the slit die (35), and the squeegee (39) following the slit die (35) spreads the edible raw material (Z) over the upper surface of the mask plate (25b) while in a lowered state. The edible raw material (Z) is pushed by the squeegeeing blade (39a) and enters the printing holes (25c), thereby being printed on the base material (13). The squeegee (39) positioned ahead of the slit die (35) remains in a raised state.

As shown in FIG. 11B, after the printing head (33) has completely moved in the direction of arrow R, the printing head moves in the opposite direction, that is, in the direction of arrow S, pushing the edible raw material (Z). At this time, the squeegee (39) on the right side of the slit die (35) in the drawing is lowered, and the left squeegee (39) is raised. While the printing head (33) moves in the direction of arrow S, the right squeegeeing blade (39a) pushes the edible raw material (Z) to fill the printing holes (25c).

When printing through the above process is completed, the suction horizontal plate (24c) is lowered and the metal mask (25) is raised. Thereafter, the base material is transferred and the above printing process is repeated.

Meanwhile, the heating dryer (50) serves to dry the printed material printed on the base material passing through the product printer (20). As previously described, the printed material is the edible raw material printed on the base material and has a paste state. The printed material must be dried to form the edible product (100).

The heating dryer (50) includes a cabinet (51), a heater (53), and a temperature sensor (54). The cabinet (51) is a case through which the base material (13) passes and accommodates the heater (53) and the temperature sensor (54).

The temperature sensor (54) detects the temperature of the base material (13) and transmits temperature information to a controller (not shown). The controller adjusts the heating temperature of the heater (53) to an optimal range. The heating method of the heater (53) may be implemented in various ways, such as IR, NIR, MIR, Xenon lamp, laser lamp, UV lamp, LED lamp, and the like.

In addition, a press roller (55) is further installed inside the cabinet (51). The press roller (55) is installed downstream of the suction roll (22) and contacts the upper surface of the base material that has passed through the suction roll to support the base material downward.

Although the present invention has been described in detail through the above embodiments, the present invention is not limited to the above embodiments, and various modifications may be made by those skilled in the art within the scope of the technical spirit of the present invention.

### [Industrial Applicability]

The present invention is industrially applicable in that film-type edible products having various shapes can be continuously produced.

## Claims

1. A mask printing-type apparatus for manufacturing film-type edible products, comprising:
a support structure through which a printing base material supplied from outside passes;
a base material guide means mounted on the support structure and guiding transfer of the base material
a base material support part installed below a transfer path of the base material and supporting the base material when an edible raw material is printed on an upper surface of the base material;
a metal mask installed above the base material support part so as to be movable up and down, the metal mask being brought into close contact with the upper surface of the base material during printing and having a plurality of printing holes through which the edible raw material passes; and
a printing unit configured to spread the edible raw material on an upper surface of the metal mask so that the edible raw material is printed on the base material through the printing holes.

2. The mask printing-type apparatus for manufacturing film-type edible products according to claim 1,
wherein the base material guide means comprises:
a horizontal maintaining roll configured to maintain the base material horizontally between the base material support part and the metal mask; and
a suction roll installed at a lower height than the horizontal maintaining roll and configured to transfer the base material after printing while adsorbing the base material.

3. The mask printing-type apparatus for manufacturing film-type edible products according to claim 2,
wherein the base material support part comprises:
a support frame fixed to the support structure;
a suction horizontal plate installed above the support frame so as to be movable up and down and configured to adsorb a lower surface of the base material in a raised state; and
a suction plate cylinder configured to move the suction horizontal plate up and down.

4. The mask printing-type apparatus for manufacturing film-type edible products according to claim 1,
wherein the support structure further includes a mask position adjusting unit connected to the metal mask and configured to adjust a position of the metal mask.

5. The mask printing-type apparatus for manufacturing film-type edible products according to claim 1,
wherein the metal mask comprises:
a mask plate having a predetermined thickness in which the printing holes are formed; and
side walls integrally formed on an upper surface of an outer portion of the mask plate and configured to prevent the edible raw material from escaping.

6. The mask printing-type apparatus for manufacturing film-type edible products according to claim 5,
wherein the printing unit comprises:
a printing head including a raw material discharge unit configured to supply the edible raw material onto the metal mask, a squeegee configured to spread the supplied edible raw material on the mask plate, and a squeegee lifting means configured to move the squeegee up and down; and
a head driving unit configured to reciprocate the printing head so that the squeegee spreads the edible raw material on the mask plate.

7. The mask printing-type apparatus for manufacturing film-type edible products according to claim 6,
wherein the head driving unit comprises:
a cross rail extending in a direction perpendicular to a transfer direction of the base material;
a slider slidably mounted on the cross rail; and
a supporter fixed to the slider and supporting the printing head, wherein the printing unit further comprises:
a lifting support plate supported by the supporter so as to be movable up and down; and
a support plate lifting unit configured to adjust a height of the lifting support plate,
wherein the squeegees are disposed below the lifting support plate and are spaced apart from each other in parallel with the raw material discharge unit interposed therebetween, and
wherein the squeegee lifting means comprises squeegee cylinders positioned above the lifting support plate and configured to independently move each of the squeegees up and down.

8. The mask printing-type apparatus for manufacturing film-type edible products according to claim 7,
wherein the raw material discharge unit is a slit die comprising:
a bank configured to temporarily receive the edible raw material supplied from outside; and
one or more discharge slits configured to discharge the edible raw material in the bank downward toward a metal plate.

9. The mask printing-type apparatus for manufacturing film-type edible products according to claim 1,
further comprising a dryer configured to dry printed material printed on the base material passing through the support structure.
